# EUROPÄISCHE PATENTSCHRIFT

(11) **EP 3 535 601 B1**
(45) Veröffentlichungstag und Bekanntmachung des Hinweises auf die Patenterteilung: **23.10.2024**
(21) Anmeldenummer: 17804430.1
(22) Anmeldetag: 07.11.2017
(51) Int. Cl.: G01S 7/481, G02B 26/10

(54) **FASER-SCANNER MIT MINDESTENS ZWEI FASERN**
FIBER SCANNER HAVING AT LEAST TWO FIBERS
SCANNER À FIBRES COMPORTANT AU MOINS DEUX FIBRES

(30) Priorität: 07.11.2016 DE 102016013227
(43) Veröffentlichungstag der Anmeldung: 11.09.2019
(73) Patentinhaber: Blickfeld GmbH, 80339 München (DE)
(72) Erfinder: PETIT, Florian, 81247 München (DE)
(74) Vertreter: Kraus & Lederer PartGmbB
(86) Internationale Anmeldenummer: PCT/DE2017/100940
(87) Internationale Veröffentlichungsnummer: WO 2018/082750

(56) Entgegenhaltungen:
- DE-A1- 19 963 382
- JP-A- 2015 099 270
- US-A1- 2004 082 247

## Beschreibung

### TECHNISCHES GEBIET

Verschiedene Beispiele der Erfindung betreffen im Allgemeinen einen Faser-Scanner, der eingerichtet ist, um Licht umzulenken. Verschiedene Beispiele der Erfindung betreffen insbesondere eine Vorrichtung mit mindestens zwei faserförmigen Elementen, die zwischen einer Fixierung und einer Umlenkeinheit angeordnet sind.

### HINTERGRUND

Die Abstandsmessung von Objekten ist in verschiedenen Technologiefeldern erstrebenswert. Zum Beispiel kann es im Zusammenhang mit Anwendungen des autonomen Fahrens erstrebenswert sein, Objekte im Umfeld von Fahrzeugen zu erkennen und insbesondere einen Abstand zu den Objekten zu ermitteln.

Eine Technik zur Abstandsmessung von Objekten ist die sogenannte LIDAR-Technologie (engl. Light detection and ranging; manchmal auch LADAR). Dabei wird gepulstes Laserlicht von einem Emitter ausgesendet. Die Objekte im Umfeld reflektieren das Laserlicht. Diese Reflexionen können anschließend gemessen werden. Durch Bestimmung der Laufzeit des Laserlichts kann ein Abstand zu den Objekten bestimmt werden.

Um die Objekte im Umfeld ortsaufgelöst zu erkennen, kann es möglich sein, das Laserlicht zu scannen. Je nach Abstrahlwinkel des Laserlichts können dadurch unterschiedliche Objekte im Umfeld erkannt werden.

Herkömmliche ortsaufgelöste LIDAR-Systeme weisen jedoch den Nachteil auf, dass sie vergleichsweise teuer, schwer, wartungsintensiv und/oder groß sein können. Typischerweise wird bei LIDAR-Systemen ein Scanspiegel verwendet, der in unterschiedliche Positionen gebracht werden kann. Oftmals ist der Scanspiegel groß und die Verstell-Mechanik kann wartungsintensiv und/oder teuer sein.

Aus Leach, Jeffrey H., Stephen R. Chinn, and Lew Goldberg. "Monostatic all-fiber scanning LADAR system." Applied optics 54.33 (2015): 9752-9757 sind Techniken bekannt, um Mittels einer einstellbaren Krümmung einer Lichtfaser eine gescannte LIDAR-Messung durchzuführen. Es wird ein Faser-Scanner beschrieben. Entsprechende Techniken sind auch aus Mokhtar, M. H. H., and R. R. A. Syms. "Tailored fibre waveguides for precise two-axis Lissajous scanning." Optics express 23.16 (2015): 20804-20811 bekannt.

Aus US2004082247 A1 ist ein MEMS-Scanner bekannt. Aus DE19963382 A1 ist ein weiterer Mikrospiegel bekannt. Aus JP2015099270 A ist ein optischer Scanner bekannt.

Solche Techniken weisen den Nachteil auf, dass die Krümmung der Lichtfaser vergleichsweise limitiert ist. Außerdem kann es schwierig möglich sein, eine Optik zu implementieren, die eine Strahldivergenz von Laserlicht, das aus dem Ende der Lichtfaser austritt, zu vermeiden.

### KURZE BESCHREIBUNG DER ERFINDUNG

Deshalb besteht ein Bedarf für verbesserte Techniken zur Abstandsmessung von Objekten im Umfeld einer Vorrichtung. Insbesondere besteht ein Bedarf für solche Techniken, welche zumindest einige der oben genannten Einschränkungen und Nachteile beheben.

Die Vorrichtung umfasst mindestens zwei faserförmige Elemente. Die mindestens zwei faserförmigen Elemente sind zwischen einer Fixierung und einer Umlenkeinheit angeordnet. Die Vorrichtung umfasst auch die Umlenkeinheit. Die Umlenkeinheit ist eingerichtet, um Licht umzulenken. Die Vorrichtung umfasst auch einen Aktuator, der eingerichtet ist, um mindestens einen Freiheitsgrad der Bewegung der mindestens zwei faserförmigen Elemente anzuregen.

Der Aktuator ist eingerichtet, um den mindestens einen Freiheitsgrad der Bewegung der mindestens zwei faserförmigen Elemente gekoppelt anzuregen. Der mindestens eine Freiheitsgrad der Bewegung umfasst eine Torsionsmode der mindestens zwei faserförmigen Elemente.

Beispielsweise könnte die Vorrichtung eine Laserlichtquelle umfassen, die eingerichtet ist, um das Laserlicht auszusenden. Beispielsweise könnte die Vorrichtung einen Detektor aufweisen, der eingerichtet ist, um reflektiertes Laserlicht zu detektiert. Beispielsweise könnte ein Einzelphotonen-Lawinen-Detektor-Array (engl. single photon avalanche detector array, SPAD) verwendet werden. Beispielsweise könnte die Vorrichtung eine LIDAR-Steuereinheit aufweisen, die eingerichtet ist, um die Laserlichtquelle und den Detektor anzusteuern und basierend auf einer Laufzeit des Laserlichts zwischen Laserlichtquelle und Detektor einen Abstand von Umfeldobjekten zu bestimmen.

Ein Verfahren umfasst, mittels eines Aktuators: Anregen einer Torsionsmode von mindestens zwei faserförmigen Elementen, die zwischen einer Fixierung und einer Umlenkeinheit angeordnet sind. Dabei ist die Umlenkeinheit eingerichtet, um Licht umzulenken. Durch das Anregen der Torsionsmode erfolgt ein Verdrillen der mindestens zwei faserförmigen Elemente ineinander um eine Zentralachse der mindestens zwei faserförmigen Elemente. Außerdem erfolgt durch das Anregen der Torsionsmode auch ein Verdrillen jedes faserförmigen Elements der mindestens zwei faserförmigen Elemente um die entsprechende Längsachse. Das Anregen der Torsionsmode kann gekoppelt erfolgen.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### KURZE BESCHREIBUNG DER FIGUREN

FIG. 1 illustriert schematisch einen Faser-Scanner gemäß verschiedener Beispiele, wobei der Faser-Scanner drei in Bezug auf eine Zentralachse rotationssymmetrisch angeordnete Fasern aufweist.
FIG. 2 illustriert schematisch den Faser-Scanner gemäß dem Beispiel der FIG. 1 in größerem Detail, wobei FIG. 2 insbesondere die Umlenkeinheit mit einem Spiegel illustriert.
FIG. 3 ist eine Querschnittsansicht des Faser-Scanners gemäß dem Beispiel der FIG. 1 in einem Ruhezustand.
FIG. 4 ist eine Querschnittsansicht des Faser-Scanners gemäß dem Beispiel der FIG. 1 in einem angeregten Zustand, wobei in FIG. 4 eine Torsionsmode dargestellt ist.
FIG. 5 ist eine Querschnittsansicht des Faser-Scanners gemäß dem Beispiel der FIG. 1 in einem angeregten Zustand, wobei in FIG. 5 eine Transversalmode dargestellt ist.
FIGs. 6 und 7 illustrieren schematisch die Transversalmode gemäß verschiedener Beispiele.
FIG. 8 illustriert schematisch ein Spektrum der Freiheitsgrade der Bewegung der Fasern des Faser-Scanners gemäß verschiedener Beispiele.
FIG. 9 illustriert schematisch ein Spektrum der Freiheitsgrade der Bewegung der Fasern des Faser-Scanners gemäß verschiedener Beispiele.
FIG. 10 illustriert schematisch einen Faser-Scanner gemäß verschiedener Beispiele, wobei der Faser-Scanner vier in Bezug auf eine Zentralachse rotationssymmetrisch angeordnete Fasern aufweist.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Funktionale Einheiten können als Hardware, Software oder eine Kombination aus Hardware und Software implementiert werden.

Nachfolgend werden verschiedene Techniken zum Scannen von Licht beschrieben. Die nachfolgend beschriebenen Techniken können zum Beispiel das zweidimensionale Scannen von Licht ermöglichen. Das Scannen kann wiederholtes Aussenden des Lichts unter unterschiedlichen Abstrahlwinkeln bezeichnen. Dazu kann das Licht durch eine Umlenkeinheit umgelenkt werden. Das Scannen kann das wiederholte Abtasten von unterschiedlichen Punkten in der Umgebung mittels des Lichts bezeichnen. Z.B. kann die Menge der unterschiedlichen Punkte in der Umgebung und/oder die Menge der unterschiedlichen Abstrahlwinkel einen Bildbereich festlegen.

In verschiedenen Beispielen kann das Scannen von Licht durch die zeitliche Überlagerung und optional eine örtliche Überlagerung von zwei Bewegungen entsprechend unterschiedlicher Freiheitsgrade mindestens eines beweglichen Elements erfolgen. Dadurch kann in verschiedenen Beispielen eine Überlagerungsfigur abgefahren werden. Manchmal wird die Überlagerungsfigur auch als Lissajous-Figur bezeichnet. Die Überlagerungsfigur kann eine Abfolge, mit der unterschiedliche Abstrahlwinkel umgesetzt werden, beschreiben.

In verschiedenen Beispielen ist es möglich, Laserlicht zu scannen. Dabei kann zum Beispiel kohärentes oder inkohärentes Laserlicht verwendet werden. Es wäre möglich, polarisiertes oder unpolarisiertes Laserlicht zu verwenden. Beispielsweise wäre es möglich, dass das Laserlicht gepulst verwendet wird. Zum Beispiel können kurze Laserpulse mit Pulsbreiten im Bereich von Femtosekunden oder Pikosekunden oder Nanosekunden verwendet werden. Beispielsweise kann eine Pulsdauer im Bereich von 0,5 - 3 Nanosekunden liegen. Das Laserlicht kann eine Wellenlänge im Bereich von 700 - 1800 nm aufweisen. Aus Gründen der Einfachheit wird nachfolgend vornehmlich Bezug genommen auf Laserlicht; die verschiedenen hierin beschriebenen Beispiele können aber auch zum Scannen von Licht aus anderen Lichtquellen, zum Beispiel Breitbandlichtquellen oder RGB-Lichtquellen, angewendet werden. RGB-Lichtquellen bezeichnen hierin im Allgemeinen Lichtquellen im sichtbaren Spektrum, wobei der Farbraum durch Überlagerung mehrerer unterschiedlicher Farben - beispielsweise rot, grün, blau oder cyan, magnta, gelb, schwarz - abgedeckt wird.

In verschiedenen Beispielen wird zum Scannen des Laserlichts ein bewegliches Ende eines faserförmigen Elements oder mehrerer faserförmiger Elemente, nachfolgend einfach Fasern genannt, verwendet.

Es können unterschiedliche Typen von Fasern verwendet werden. Beispielsweise können Lichtfasern verwendet werden, die auch als Glasfasern bezeichnet werden. Dies ist aber nicht erforderlich. Dabei ist es aber nicht erforderlich, dass die Fasern aus Glas hergestellt sind. Die Fasern können zum Beispiel aus Kunststoff, Glas, Silizium, oder einem anderen Material hergestellt sein. Beispielsweise können die Fasern aus Quarzglas hergestellt sein. Beispielsweise können die Fasern ein 70 GPa Elastizität-Modul aufweisen oder ein Elastizität-Modul im Bereich von 40 GPa - 80 GPa, vorzugsweise im Bereich 60 - 75 GPa. Beispielsweise können die Fasern ein Elastizität-Modul im Bereich von 140 GPa - 200 Gpa aufweisen. Beispielsweise können die Fasern bis zu 4 % Materialdehnung ermöglichen. In manchen Beispielen weisen die Fasern einen Kern auf, in welchem das eingespeiste Laserlicht propagiert und durch Totalreflektion an den Rändern eingeschlossen ist (Lichtwellenleiter). Die Faser muss aber keinen Kern aufweisen. In verschiedenen Beispielen können sogenannte Einmoden-Lichtfasern (engl. single mode fibers) oder Mehrmoden-Lichtfasern (engl. multimode fibers) verwendet werden. Die verschiedenen hierin beschriebenen Fasern können zum Beispiel einen kreisförmigen Querschnitt aufweisen. Es wäre zum Beispiel möglich, dass die verschiedenen hierin beschriebenen Fasern einen Durchmesser aufweisen, der nicht kleiner als 50 µm ist, optional nicht <150 µm ist, weiter optional nicht <500 µm ist, weiter optional nicht <1 mm ist. Der Durchmesser kann aber auch < 1 mm sein, optional < 500 µm, weiter optional kleiner 150 µm. Zum Beispiel können die verschiedenen hierin beschriebenen Fasern verbiegbar bzw. krümmbar ausgestaltet sein, d.h. flexibel. Dazu kann das Material der hierin beschriebenen Fasern eine gewisse Elastizität aufweisen. Deshalb können die Fasern auch als Federelemente bezeichnet werden. Die Fasern können z.B. eine Länge im Bereich von 3 mm bis 12 mm aufweisen, optional im Bereich von 4 mm bis 8 mm.

Beispielsweise könnte das bewegliche Ende der Fasern in einer oder zwei Dimensionen bewegt werden. Dazu können ein oder mehrere Aktuatoren verwendet werden. Beispielsweise wäre es möglich, dass das bewegliche Ende der Fasern gegenüber einer Fixierung der Fasern verkippt wird; dies resultiert in einer Krümmung der Faser. Dies kann einem ersten Freiheitsgrad der Bewegung entsprechen; dieser kann als Transversalmode (oder manchmal auch als wiggle mode) bezeichnet werden. Alternativ oder zusätzlich wäre es möglich, dass das bewegliche Ende der Fasern entlang der Faserachse verdreht wird (Torsionsmode). Dies kann einem zweiten Freiheitsgrad der Bewegung entsprechen. Durch das Bewegen des beweglichen Endes der Fasern kann erreicht werden, dass Laserlicht unter verschiedenen Winkeln abgestrahlt wird. Dazu kann eine Umlenkeinheit vorgesehen sein. Dadurch kann ein Umfeld mit dem Laserlicht gescannt werden. Je nach Stärke der Bewegung des beweglichen Endes können unterschiedlich große Bildbereiche implementiert werden.

In den verschiedenen hierin beschriebenen Beispielen ist es jeweils möglich, die Torsionsmode alternativ oder zusätzlich zur Transversalmode anzuregen, d.h. es wäre eine zeitliche und örtliche Überlagerung der Torsionsmode und der Transversalmode möglich. Diese zeitliche und örtliche Überlagerung kann aber auch unterdrückt werden. In anderen Beispielen könnten auch andere Freiheitsgrade der Bewegung implementiert werden.

In verschiedenen hierein beschriebenen Beispielen werden die Fasern als Halterung für eine Umlenkeinheit verwendet. Die Umlenkeinheit kann dabei am beweglichen Ende der Fasern starr bzw. ortsfest angebracht sein, z.B. durch Kleber. Dabei kann das Laserlicht jedoch auf einem anderem optischen Pfad zur Umlenkeinheit gelangen, als durch eine oder mehrere der Fasern. Die Fasern dienen in anderen Worten nicht notwendigerweise als Lichtwellenleiter für das Laserlicht auf dem Weg zur Umlenkeinheit. Wenn das Laserlicht nicht durch die Fasern zur Umlenkeinheit gelangt, kann ein kompliziertes und aufwendiges Einkoppeln des Laserlichts in zumindest eine der Fasern vermieden werden. Außerdem kann Laserlicht verwendet werden, was zum Beispiel nicht nur die örtliche TEM00 Mode, sondern alternativ oder zusätzlich andere Moden aufweist. Dies kann die Verwendung eines besonders kleinen Lasers, beispielsweise einer Laserdiode ermöglichen.

Beispielsweise kann die Umlenkeinheit als Prisma oder Spiegel implementiert sein. Beispielsweise könnte der Spiegel durch einen Wafer, etwa einen Silizium-Wafer, oder ein Glassubstrat implementiert sein. Beispielsweise könnte der Spiegel eine Dicke im Beriech von 0,05 µm - 0,1 mm aufweisen. Beispielsweise könnte der Spiegel eine Dicke von 25 µm oder 50 µm aufweisen. Beispielsweise könnte der Spiegel eine Dicke im Bereich von 25 µm bis 75 µm aufweisen. Beispielsweise könnte der Spiegel quadratisch, rechtecksförmig oder kreisförmig ausgebildet sein. Beispielsweise könnte der Spiegel einen Durchmesser von 3 mm bis 12 mm aufweisen oder insbesondere 8 mm.

Im Allgemeinen können solche Techniken zum Scannen von Licht in unterschiedlichsten Anwendungsgebieten eingesetzt werden. Beispiele umfassen Endoskope und RGB-Projektoren und Drucker. In verschiedenen Beispielen können LIDAR-Techniken angewendet werden. Die LIDAR-Techniken können dazu genutzt werden, um eine ortsaufgelöste Abstandsmessung von Objekten im Umfeld durchzuführen. Zum Beispiel kann die LIDAR-Technik Laufzeitmessungen des Laserlichts zwischen dem beweglichen Ende der Faser, dem Objekt und einem Detektor umfassen.

Obwohl verschiedene Beispiele in Bezug auf LIDAR-Techniken beschrieben werden, ist die vorliegende Anmeldung nicht auf LIDAR-Techniken beschränkt. Zum Beispiel können die hierin beschriebenen Aspekte in Bezug auf das Scannen des Laserlichts mittels des beweglichen Endes der Faser auch für andere Anwendungen eingesetzt werden. Beispiele umfassen zum Beispiel das das Projizieren von Bilddaten in einem Projektor - dabei könnte z.B. eine RGB-Lichtquelle verwendet werden.

Verschiedenen Beispielen liegt die Erkenntnis zugrunde, dass es erstrebenswert sein kann, das Scannen des Laserlichts mit einer hohen Genauigkeit bezüglich des Abstrahlwinkels durchzuführen. Zum Beispiel kann im Zusammenhang mit LIDAR-Techniken eine Ortsauflösung der Abstandsmessung durch eine Ungenauigkeit des Abstrahlwinkels begrenzt sein. Typischerweise wird eine höhere (niedrigere) Ortsauflösung erreicht, je genauer (weniger genau) der Abstrahlwinkel des Laserlichts bestimmt werden kann.

Nachfolgend werden Techniken beschrieben, um einen besonders robusten Faser-Scanner bereitzustellen. In verschiedenen Beispielen umfasst ein Faser-Scanner mindestens zwei Fasern, die zwischen einer Fixierung und eine Umlenkeinheit angeordnet sind. Durch das Verwenden von mehr als einer Faser kann erreicht werden, dass sich die ansonsten in der einzelnen Faser auftretende Belastung - wie beispielsweise Materialspannungen - auf mehr als eine Faser verteilt. Dadurch kann ein besonders langlebiger Faser-Scanner bereitgestellt werden. Außerdem kann erreicht werden, dass äußere Störeinflüsse vom Faser-Scanner besonders gut absorbiert werden; z.B. können Beschleunigungen nur eine vergleichsweise geringe Auswirkung auf das Scannen des Laserlichts haben.

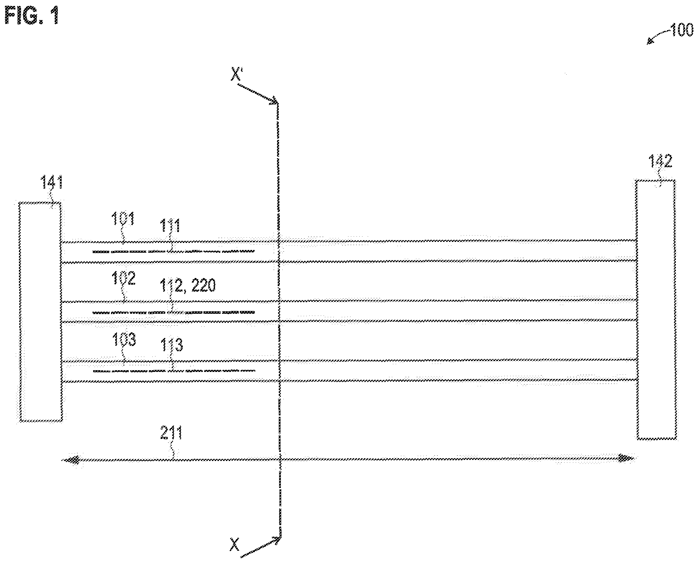

FIG. 1 illustriert Aspekte in Bezug auf einen Faser-Scanner 100 gemäß verschiedener Beispiele. FIG. 1 zeigt einen nicht angeregten Ruhezustand des Faser-Scanners 100. Der Faser-Scanner 100 umfasst eine Anzahl von drei Fasern 101-103. Jede der Fasern 101-103 ist zwischen einer Fixierung 141 und einer Umlenkeinheit 142 angeordnet. Die Fasern 101-103 sind gerade, d.h. weisen im Ruhezustand keine Krümmung oder Knicke auf.

Beispielsweise könnte die Fixierung 141 durch eine Ferrule implementiert sein. Es wäre möglich, dass eine einzelne Ferrule verwendet wird, die mehrere Bohrungen aufweist, in welche die verschiedenen Fasern 101-103 eingeschoben sind. In anderen Beispielen wäre es aber auch möglich, dass die Fixierung 141 durch mehrere Ferrulen implementiert ist, zum Beispiel eine Ferrule pro Faser 101-103. Dann wäre es möglich, dass die verschiedenen Ferrulen miteinander verbunden sind, zum Beispiel miteinander verklebt sind.

Es wäre zum Beispiel möglich, dass der Faser-Scanner 100 einen Aktuator aufweist (in FIG. 1 nicht dargestellt). Der Aktuator könnte zum Beispiel benachbart zu der Fixierung 141 angeordnet sein. Beispielsweise könnte der Aktuator als Piezoaktuator implementiert sein, z.B. als Biegepiezoaktuator. Es wäre aber auch möglich, andere Aktuatoren zu verwenden, beispielsweise Magnetfeldspulen. Dabei ist es grundsätzlich möglich, dass der Aktuator eingerichtet ist, um die verschiedenen Fasern 101- 103 gekoppelt anzuregen. Z.B. könnte dazu eine geeignete Anregungstechnik vorgesehen sein, die eine Bewegung auf alle Fasern 101-103 überträgt. Dies bedeutet, dass ein getrenntes Anregen einzelner Fasern 101-104 nicht oder nur eingeschränkt möglich sein kann. Dies kann z.B. dadurch erreicht werden, dass ein Biegepiezoaktuator alle Fasern 101-104 zusammen über einen durch die Fixierung 141 geleiteten Kraftfluss anregt. Entsprechend könnte dies erreicht werden, indem der Kraftfluss auf ein mit allen Fasern 101-104 verbundenes magnetisches Material durch ein gemeinsames Magnetfeld einer Magnetfeldspule angewendet wird. Solche Techniken weisen den Vorteil auf, dass eine Energie-effiziente und platzsparende Anregung ermöglicht wird. Außerdem kann durch die Kopplung vermieden werden, dass unterschiedliche Aktuatoren phasenkohärent betrieben werden müssen, was die Implementierung vereinfacht. Durch die gekoppelte Anregung kann insbesondere eine gekoppelte Torsionsmode und/oder eine gekoppelte Transversalmode angeregt werden.

Der Aktuator kann zur direkten Kraftwirkung zur Anregung des Freiheitsgrads der Bewegung eingerichtet sein, d.h. es kann vermieden werden, eine parametrische Anregung - wie z.B. in Referenzimplementierungen mit elektrostatischen interdigitalen Fingerstrukturen der Fall - zu verwenden.

Zum Beispiel könnte die Fixierung 141 starr auf einer Grundplatte oder einem Rahmen angebracht sein. In einem solchen Beispiel können die Enden der Fasern 101-103, die angrenzend an die Umlenkeinheit 142 angeordnet sind, bewegliche Enden implementieren. Dies bedeutet, dass der Aktuator eingerichtet sein kann, um einen oder mehrere Freiheitsgrade der Bewegung der Fasern 101-103 anzuregen. Zum Beispiel könnte der Aktuator eingerichtet sein, um eine Torsionsmode der Fasern 101-103 anzuregen. Alternativ oder zusätzlich könnte der Aktuator eingerichtet sein, um eine Transversalmode der Fasern 101-103 anzuregen. Durch die Bewegung des beweglichen Endes der Fasern 101-103 kann erreicht werden, dass die Umlenkeinheit 142 bewegt wird. Beispielsweise könnte die Umlenkeinheit 142 verschoben und/oder verkippt werden. Dadurch kann Licht gescannt werden.

In einem einfachen Beispiel könnten die drei Längsachsen 101-103 der Fasern 101-103 in einer Ebene angeordnet sein. In dem Beispiel der FIG. 1 sind die drei Fasern 101-103 jedoch nicht in einer Ebene angeordnet, wie nachfolgend noch näher erläutert werden wird.

In FIG. 1 ist eine Anzahl von drei Fasern 101-103 dargestellt. Im Allgemeinen wäre es aber auch möglich, dass der Faser-Scanner 100 eine geringere Anzahl oder eine größere Anzahl von Fasern aufweist, z.B. vier oder mehr Fasern.

Durch das Verwenden von mehreren Fasern 101-103 kann erreicht werden, dass sich die Spannungen aufgrund der Bewegung der Fasern 101-103 auf die verschiedenen Fasern 101-103 verteilen. Dadurch kann erreicht werden, dass das Material der einzelnen Fasern 101-103 vergleichsweise geringe Spannungen aufnehmen muss. Außerdem kann erreicht werden, dass die Verbindungspunkte zwischen der Fixierung 141 und jeder der Fasern 101-103 vergleichsweise geringe Spannungen übertragen müssen. Derart kann eine Lebensdauer des Faser-Scanners 100 erhöht werden.

Im Beispiel der FIG. 1 sind die Fasern 101-103 parallel zueinander angeordnet. Dies bedeutet, dass die Längsachsen 111-113 der Fasern jeweils paarweise Winkel miteinander einschließen, die in etwa 0° betragen. Im Allgemeinen wäre es möglich, dass die Längsachse 111-113 der Fasern 101-103 jeweils paarweise Winkel miteinander einschließen, die nicht größer als 45° sind, optional nicht größer als 10°, weiter optional nicht größer als 1°.

Derart kann unter anderem erreicht werden, dass der Faser-Scanner 100 eine vergleichsweise geringe Ausdehnung senkrecht zu den Längsachsen 111-113 der Fasern 101-103 aufweist. Außerdem kann eine besonders symmetrische Anregung der Bewegung des Fasern 101-103 in die verschiedenen Raumrichtungen erzielt werden.

Indem die Fasern 101-103 im Wesentlichen parallel zueinander angeordnet werden, kann erreicht werden, dass die Fasern 111-113 im Wesentlichen dieselbe Länge 211 aufweisen. Zum Beispiel ist in FIG. 1 eine Implementierung dargestellt, in welcher die Fasern 101-103 alle dieselbe Länge 211 aufweisen. Beispielsweise könnte die Länge 211 im Bereich von 2 mm bis 20 mm liegen, optional im Bereich von 3 mm bis 10 mm, weiter optional im Bereich von 4 mm bis 7 mm. Im Allgemeinen wäre es möglich, dass die Fasern 101-103 Längen 211 aufweisen, die nicht mehr als 10 % voneinander abweichen, optional nicht mehr als 2 %, weiter optional nicht mehr als 0,1 %.

In dem die Fasern 101-103 im Wesentlichen dieselbe Länge 211 aufweisen, kann folgender Effekt erzielt werden: beim Anregen der Transversalmode der Fasern 101-103 erfolgt keine oder keine signifikante Verkippung der Umlenkeinheit 142; stattdessen erfolgt eine Verschiebung der Umlenkeinheit 142 senkrecht zu den Längsachse 111-113. Dies bedeutet, dass ungewollte Anregungen der Transversalmode etwa aufgrund von äußeren Einflüssen keine signifikante Änderung des Abstrahlwinkels von der Umlenkeinheit 142 umgelenkten Lichts (in FIG. 1 nicht dargestellt) bewirken. Dadurch kann der Faser-Scanner 100 besonders robust gegenüber äußeren Einflüssen sein.

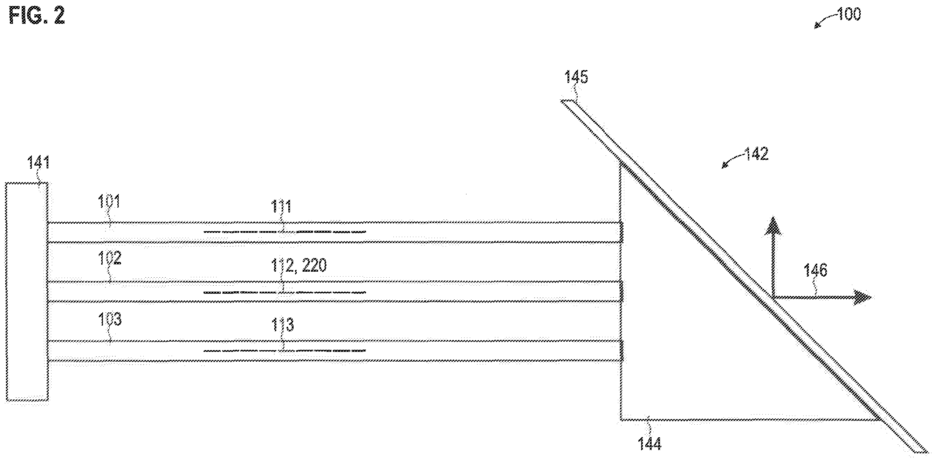

FIG. 2 illustriert Aspekte in Bezug auf einen Faser-Scanner 100 gemäß verschiedener Beispiele. Der Faser-Scanner 100 gemäß dem Beispiel der FIG. 2 entspricht grundsätzlich dem Faser-Scanner 100 gemäß dem Beispiel der FIG. 1. In FIG. 2 ist ferner die Umlenkeinheit 142 in größerem Detail dargestellt. Auch FIG. 2 zeigt den Ruhezustand des Faser-Scanners 100.

Die Umlenkeinheit 142 weist ein Endstück auf 144, welches zum Beispiel entsprechend der Fixierung 141 als Ferrule etc. implementiert werden könnte. An dem Endstück 144 ist ein Spiegel 145 aufgebracht. Dies bedeutet, dass das Endstück 144 auf der Rückseite des Spiegels 145 angeordnet ist. Aus FIG. 2 ist ersichtlich, dass sich die Fasern 101-103 zwischen der Fixierung 141 und dem Endstück 144 erstrecken. Das Endstück 144 ist zwischen dem Spiegel 145 und den Fasern 101-103 angebracht. Aus FIG. 2 ist also ersichtlich, dass sich die Fasern 101-103 von einer Rückseite des Spiegels 145 weg erstrecken, und zwar hin zur Fixierung 141. Dadurch können platzintensive Rahmen-artige Strukturen wie bei herkömmlichen MEMS-Ansätzen vermieden werden. Die Umlenkeinheit 142 kann über das Endstück 144 mit den Fasern 101-103 verbunden werden. Dadurch ist eine zweistückige Fertigung möglich, sodass keine komplizierte integrierte Rückseitenstrukturierung wie in herkömmlichen MEMS-Ansätzen erfolgen muss.

Insbesondere weißt der Spiegel 145 eine Verkippung gegenüber den Längsachsen 111-113 bzw. im Allgemeinen gegenüber der Zentralachse 220 auf, im Fall der FIG. 2 von in etwa 45°. Im Allgemeinen könnte die Verkippung gegenüber der Zentralachse 220 bzw. insbesondere gegenüber den Längsachsen 111-113 im Bereich von 30° - 50° liegen. Dadurch kann erreicht werden, dass Licht 146 durch den Spiegel 145 wie in dem Beispiel der FIG. 2 umgelenkt wird. Durch das Anregen der Torsionsmode der Fasern 101-103 kann erreicht werden, dass das Licht 146 unter verschiedenen Winkeln - die dem Torsionswinkel entsprechen - abgelenkt wird. Dies entspricht in etwa der Funktionsweise eines Periskops. Der Abstrahlwinkel es Lichts 146 wird eingestellt durch die Verdrehung und die Verkippung des Spiegels 145. Bei Verwendung der Torsionsmode liegt nur eine Verdrehung vor.

Das Periskop-artige Scannen mittels der Torsionsmode weißt den Vorteil auf, dass - sofern der Spiegel 145 auch als Detektorapertur verwendet wird - die Größe der Detektorapertur keine Abhängigkeit vom Scanwinkel aufweist; der Winkel zwischen einfallendem Licht und Spiegel 145 ist nämlich nicht abhängig vom Scanwinkel. Das ist verschieden zu Referenzimplementierungen, bei denen durch Verkippung des Spiegels die Größe der Detektorapertur - und damit die Sensitivität der Messung - als Funktion des Scanwinkels variiert.

In dem Beispiel der FIG. 2 ist ein Szenario dargestellt, bei welchem das Licht 146 nicht durch die Fasern 101-103 zur Umlenkeinheit 142 geleitet wird. Insbesondere ist in FIG. 2 ein Szenario dargestellt, bei dem ein Strahlengang des Lichts 146 parallel zu den Längsachsen 111-113 der Fasern 101-103 verläuft und ein weiterer Strahlengang des Lichts 146 - nach bzw. vor Umlenkung durch den Spiegel - senkrecht zu den Längsachsen 111-113 der Fasern 101-103 verläuft. Im Allgemeinen kann der Strahlengang des Lichts 146 parallel zu der Zentralachse 220 verlaufen. Es wären aber auch Implementierungen denkbar, in welchen das Licht 146 durch zumindest eine der Fasern 101-103 zur Umlenkeinheit 142 geleitet wird. Dazu wäre es zum Beispiel möglich, dass das Licht an einem von der Umlenkeinheit 142 beabstandeten Ende in eine oder mehrere der Fasern 101-103 eingekoppelt wird. In einem solchen Szenario könnte die Umlenkeinheit 142 zum Beispiel als Linse und/oder Prisma implementiert werden. Beispielsweise könnte eine Gradientenindex(GRIN)-Linse verwendet werden.

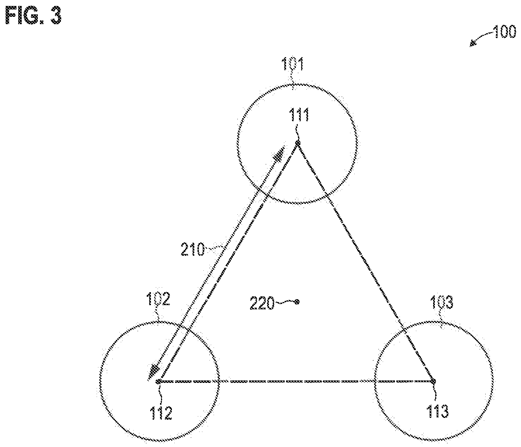

FIG. 3 illustriert Aspekte in Bezug auf einen Faserscanner 100 gemäß verschiedener Beispiele. FIG. 3 ist dabei eine Querschnittsansicht entlang der Schnittlinie X-X' aus FIG. 1. Auch FIG. 3 zeigt den Ruhezustand des Faser-Sanners 100.

In dem Beispiel der FIG. 3 sind die Fasern 101-103 rotationssymmetrischer in Bezug auf eine Zentralachse 220 angeordnet (die Rotationssymmetrie ist in dem Beispiel der FIG. 3 durch die gestrichelten Linien illustriert). Insbesondere liegt eine dreizählige Rotationssymmetrie vor. Das Vorhandensein einer Rotationssymmetrie bedeutet beispielsweise, dass das System der Fasern 101-103 durch Rotation in sich selbst überführt werden kann. Die Zähligkeit der Rotationssymmetrie bezeichnet, wie häufig pro 360° Drehwinkel das System der Fasern 101-103 in sich selbst überführt werden kann. Im Allgemeinen könnte die Rotationssymmetrie n-zählig sein, wobei n die Anzahl der verwendeten Fasern des Faser-Scanners bezeichnet.

Durch die rotationssymmetrische Anordnung mit hoher Zähligkeit kann folgender Effekt erzielt werden: Nichtlinearitäten bei der Anregung der Torsionsmode der Fasern 101-103 können reduziert bzw. unterdrückt werden. Dies kann durch folgendes Beispiel plausibilisiert werden: zum Beispiel könnten die drei Fasern 101-103 derart angeordnet werden, dass die Längsachsen 101-103und die Zentralachse 220 alle in einer Ebene liegen. Dann würde die Rotationssymmetrie zweizählig sein (und nicht dreizählig, wie in dem Beispiel der FIG. 3). In einem solchen Fall weisen die orthogonalen Transversalmoden (unterschiedliche Richtungen senkrecht zur Zentralachse 220) unterschiedliche Frequenzen auf - aufgrund unterschiedlicher Trägheitsmomente. Damit dreht sich beispielsweise die Richtung der niederfrequenten Transversalmode zusammen mit der Rotation der Fasern 101-103 bei Anregung der Torsionsmode. Dadurch wird ein parametrischer Oszillator ausgebildet, denn die Eigenfrequenzen variieren als Funktion des Drehwinkels bzw. damit als Funktion der Zeit. Das Übertragen von Energie zwischen den verschiedenen Zuständen des parametrischen Oszillators bewirkt Nichtlinearitäten. In dem eine Rotationssymmetrie mit hoher Zähligkeit verwendet wird, kann das Ausbilden des parametrischen Oszillators verhindert werden. Vorzugsweise können die Fasern so angeordnet werden, dass keine Abhängigkeit der Eigenfrequenzen vom Torsionswinkel auftreten.

Indem Nichtlinearitäten bei der Anregung der Torsionsmode der Fasern 101-103 vermieden werden, kann erreicht werden, dass besonders große Scanwinkel des Lichts 146 durch die Torsionsmode erzielt werden können. Z.B. können Torsionswinkel von nicht weniger als 120° erzeugt werden, optional von nicht weniger als 160°.

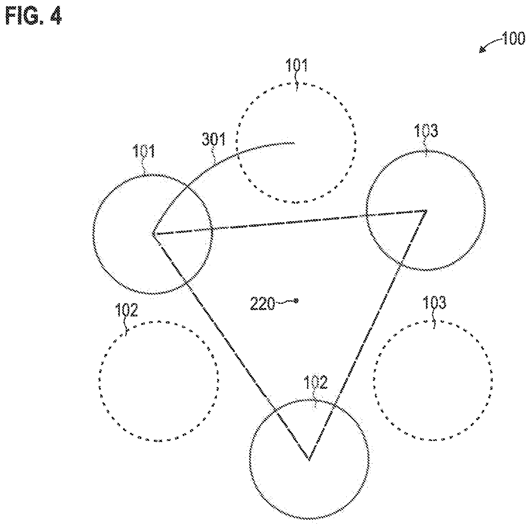

FIG. 4 illustriert Aspekte in Bezug auf einen Faser-Scanner 100 gemäß verschiedener Beispiele. Insbesondere illustriert FIG. 4 Aspekte in Bezug auf einen Freiheitsgrad der Bewegung der Fasern 101-103 des Faser-Scanners 100. Insbesondere illustriert FIG. 4 Aspekte in Bezug auf eine Torsionsmode 301.

Das Beispiel der FIG. 4 entspricht grundsätzlich dem Beispiel der FIG. 3 (wobei in FIG. 3 der Ruhezustand der Fasern 101-103 dargestellt ist; der Ruhezustand der Fasern 101-103 ist in FIG. 4 mit den gepunkteten Linien dargestellt).

In FIG. 4 ist die Torsionsmode 301 dargestellt. Die Torsionsmode 301 entspricht einer Verdrehung der Fasern 101-103 um die Zentralachse 220. Damit verdrillen sich auch die einzelnen Fasern 101-103 entlang ihrer Längsachsen 111-113. Die mehreren Fasern 101-103 verdrillen sich also (I) sowohl ineinander entlang der Zentralachse 220; als auch (II) jeweils einzeln entlang ihrer Längsachsen 111-113. Deshalb kann die Torsionsmode 301 auch als gekoppelte Torsionsmode 301 der Fasern 101-103 bezeichnet werden. Dies wird durch die geometrische Anordnung der Fasern 101-103 zueinander gefördert, nämlich insbesondere durch die parallele Anordnung der Fasern 101-103 nahe beieinander - also mit einem besonders geringen Abstand der Fasern 101-103 im Vergleich zu deren Länge. Diese gekoppelte Torsionsmode 301 kann als parallele Kinematik der Fasern 101-103 bezeichnet werden. Durch die Torsionsmode 301 könnte beispielsweise der Spiegel 145 der Umlenkeinheit 142 verdreht werden, sodass das Licht 146 unter unterschiedlichen Winkeln abgestrahlt wird.

Die Verdrillung der Fasern ineinander entlang der Zentralachse 220, sowie die Verdrillung der Fasern 101-103 entlang ihrer Längsachsen nimmt zu für größere Abstände zur Fixierung 141 sowie für größere Torsionswinkel. Wenn beispielsweise der Torsionswinkel der Torsionsmode 301 größer wird als der Winkelabstand der Fasern 101-103 (im Beispiel der FIG. 4 120° wegen der dreizähligen Rotationssymetrie) liegt eine vollständige Verdrillung mit Längs-Überlapp der Fasern 101-103 ineinander vor. Im Allgemeinen kann also der Torsionswinkel der Torsionsmode 301 größer sein als 360°/*n*, wobei n die Zähligkeit der Rotationssymmetrie beschreibt. Dadurch wird die Verdrillung der Fasern 101-103 ineinander gefördert. Diese parallele Kinematik ermöglicht große Scanwinkel, bei gleichzeitig geringen nichtlinearen Effekten, sowie geringem Platzbedarf.

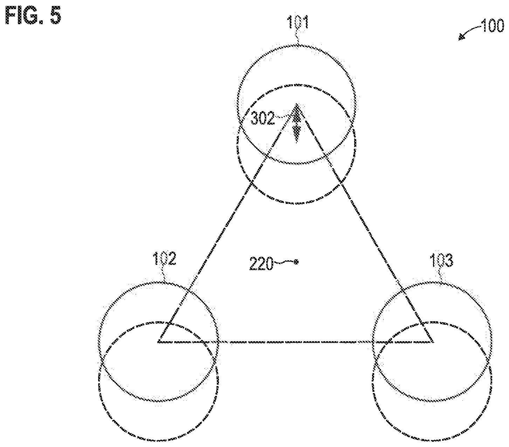

FIG. 5 illustriert Aspekte in Bezug auf einen Faser-Scanner 100 gemäß verschiedener Beispiele. Insbesondere illustriert FIG. 5 Aspekte in Bezug auf einen Freiheitsgrad der Bewegung der Fasern 101-103 des Faser-Scanners 100. Insbesondere illustriert FIG. 5 Aspekte in Bezug auf eine Transversalmode 302.

Das Beispiel der FIG. 5 entspricht grundsätzlich dem Beispiel der FIG. 3 (wobei in FIG. 3 der Ruhezustand der Fasern 101-103 dargestellt ist; der Ruhezustand der Fasern 101-103 ist in FIG. 5 mit gepunkteten Linien dargestellt).

In FIG. 5 ist die Transversalmode 302 dargestellt. Die Transversalmode 302 entspricht einer Auslenkung der Fasern 101-103 senkrecht zur Zentralachse 220. Durch die Transversalmode 301 könnte beispielsweise der Spiegel 145 der Umlenkeinheit 142 gegenüber der Zentralachse 220 verschoben und in manchen Beispielen verkippt werden, sodass das Licht 146 bei einer Verkippung unter unterschiedlichen Winkeln abgestrahlt wird.

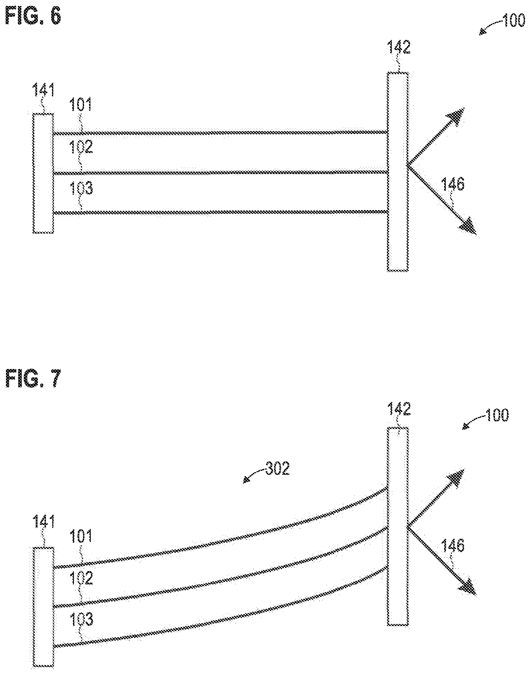

FIGs. 6 und 7 illustriert Aspekte in Bezug auf einen Faser-Scanner 100 gemäß verschiedener Beispiele. Insbesondere illustrieren FIGs. 6 und7 Aspekte in Bezug auf einen Freiheitsgrad der Bewegung der Fasern 101-103 des Faser-Scanners 100. Insbesondere illustrieren FIGs. 6 und 7 Aspekte in Bezug auf die Transversalmode 302.

In FIG. 6 ist der Ruhezustand des Faser-Scanners 100 dargestellt. In FIG. 7 ist der ausgelenkte Zustand des Faser-Scanners 100 dargestellt. Aus FIG. 7 ist ersichtlich, dass auch bei einer Auslenkung des beweglichen Endes der Fasern 101-103 keine Verkippung der Umlenkeinheit 142 stattfindet. Dies bedeutet, dass die Umlenkung des Lichts 146 im ausgelenkt Zustand im Wesentlichen der Umlenkung des Lichts 146 im Ruhezustand des Faser-Scanners 100 entspricht. Dies ist der Fall, da die Fasern 101-103 dieselbe Länge 211 aufweisen.

Damit kann erreicht werden, dass ungewollte Anregungen der Transversalmode 302 (beispielsweise aufgrund von Bodenunebenheiten, über welche ein Fahrzeug fährt, in welchem der Faser-Scanner 100 angeordnet ist), keinen oder keinen signifikanten Einfluss auf das Scannen des Lichts 146 hat. Beispielsweise könnte dazu die Ausdehnung der Umlenkeinheit 142, beispielsweise insbesondere des Spiegels 145, senkrecht zur Zentralachse 220 größer dimensioniert sein als eine typische Amplitude der Transversalmode 302. Beispielsweise könnte der Spiegel 145 einen Radius von nicht weniger als 2 mm aufweisen, optional von nicht weniger als 4 mm, weiter optional von nicht weniger als 7 mm. Typischerweise wird die Torsionsmode 301 durch äußere Einflüsse wesentlich ineffizienter angeregt, als die Transversalmode 302; deshalb ist der Faser-Scanner 100 eine besonders stabil gegenüber äußeren Einflüssen.

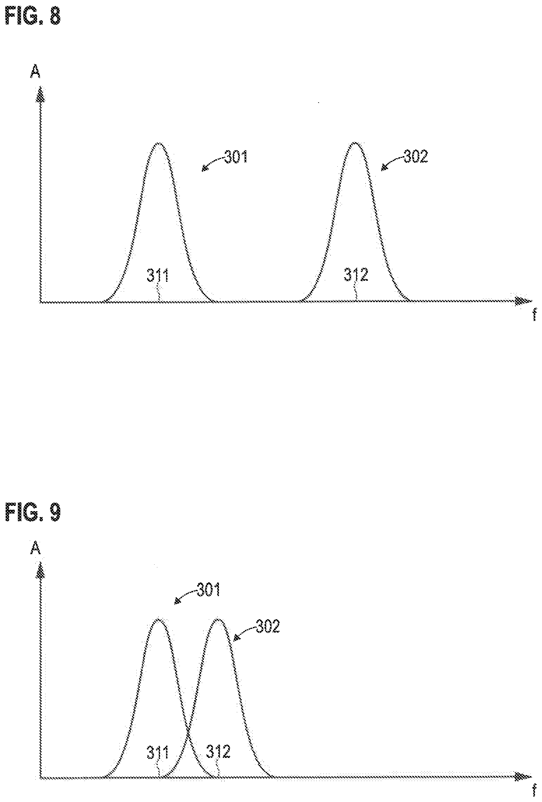

FIG. 8 illustriert Aspekte in Bezug auf die Freiheitsgrade der Bewegung 301, 302 eines Faser-Scanners 100 gemäß verschiedener Beispiele. Insbesondere illustriert FIG. 8 ein Spektrum der Freiheitsgrade der Bewegung 301, 302.

In FIG. 8 ist die Eigenfrequenz 311 der Torsionsmode dargestellt, sowie die Eigenfrequenz 312 der Transversalmode 302. Beispielsweise wäre es möglich, dass der Aktuator eingerichtet ist, um die Torsionsmode 301 bei oder nahe bei der Eigenfrequenz 311 anzuregen (resonantes bzw. semi-resonantes Scannen).

In dem Beispiel der FIG. 8 ist ersichtlich, dass die Eigenfrequenz 311 der Torsionsmode 301 niedrigster Ordnung kleiner ist als die Eigenfrequenz 312 der Transversalmode 302 niedrigster Ordnung. Insbesondere kann also die Torsionsmode 301 die Grundmode des kinematischen Systems ausbilden. Dies kann zum Beispiel dadurch erreicht werden, dass der Abstand 210 zwischen benachbarten Fasern 101-103 vergleichsweise groß dimensioniert wird (cf. FIG. 3). Dadurch wird nämlich das Trägheitsmoment der Fasern 101-103 erhöht. Durch Vergrößern des Abstands 210 wird insbesondere die Eigenfrequenz 311 der Transversalmode erhöht 301, wobei jedoch die Eigenfrequenz 312 der Torsionsmode 302 nicht oder nicht signifikant verändert wird. Dadurch kann durch geeignetes Dimensionieren des Abstands 210 erreicht werden, dass die Torsionsmode 301 eine besonders niedrige Eigenfrequenz 311, insbesondere im Vergleich zu Eigenfrequenz 312 der Transversalmode 302, aufweist. Beispielsweise könnte der Abstand 210 im Bereich von 2 % bis 50 % der Länge 211 liegen, optional im Bereich von 10 % bis 40 %, weiter optional im Bereich von 12 % bis 20 %. Insbesondere kann es durch solche Techniken möglich sein, dass die niederfrequenteste Anregung der Fasern 101-104 die Torsionsmode 301 ist.

Das Verwenden vergleichsweise geringer Eigenfrequenzen 311 für die Torsionsmode 301 kann folgenden Effekt aufweisen: ungewollte externe Einflüsse (beispielsweise aufgrund von Bodenunebenheiten, über welche ein Fahrzeug fährt, in welchem der Faser-Scanner 100 angeordnet ist), können die Torsionsmode 301 nur vergleichsweise ineffizient anregen. Dies ist der Fall, da typischerweise ungewollte externe Einflüsse einer gleichphasigen Bewegung im Bereich der Fixierung 141 in Bezug auf die unterschiedlichen Fasern 101-103 entsprechen; eine Verdrehung im Bereich der Fixierung 141 findet oftmals nicht oder nur insignifikant statt. Höherfrequente Anteile im Bereich der Eigenfrequenz 312 der Transversalmode 302 treten aber vergleichsweise selten auf. Deshalb ist ein entsprechender Faser-Scanner 100 besonders robust gegenüber äußeren Störungen.

In dem Beispiel der FIG. 8 ist eine Entartung zwischen der Torsionsmode 301 und der Transversalmode 302 aufgehoben. Dies ist der Fall, da die Resonanzkurven keinen überlappenden Bereich aufweisen, in welchem beide Amplituden signifikante Werte (beispielsweise von mehr als 5 % oder mehr als 10 % in Bezug auf das jeweilige Maximum) aufweisen. Das Aufheben der Entartung zwischen der Torsionsmode 301 und der Transversalmode 302 kann zum Beispiel durch geeignete Dimensionierung der Längen 211 in Bezug auf den Abstand 210 erreicht werden. Es könnte noch andere Systemparameter geändert werden, wie beispielsweise der Durchmesser der Umlenkeinheit 142 oder das Vorsehen eines Wuchtgewichts. Durch das Aufheben der Entartung können nichtlineare Effekte aufgrund von Kopplungen zwischen den verschiedenen Freiheitsgraden der Bewegung reduziert bzw. vermieden werden.

In FIG. 9 ist ein Beispiel dargestellt, in dem die Entartung zwischen der Torsionsmode 301 und der Transversalmode 302 nicht aufgehoben ist. FIG. 9 entspricht ansonsten im Wesentlichen der FIG. 8. Ein solches Beispiel kann insbesondere dann erstrebenswert sein, wenn eine zeitlich und örtlich überlagerte Anregung der Transversalmode 302 100 Torsionsmode 301 gewünscht ist, zum Beispiel um ein zweidimensionales Scannen des Lichts 146 mit einer Überlagerungsfigur zu ermöglichen.

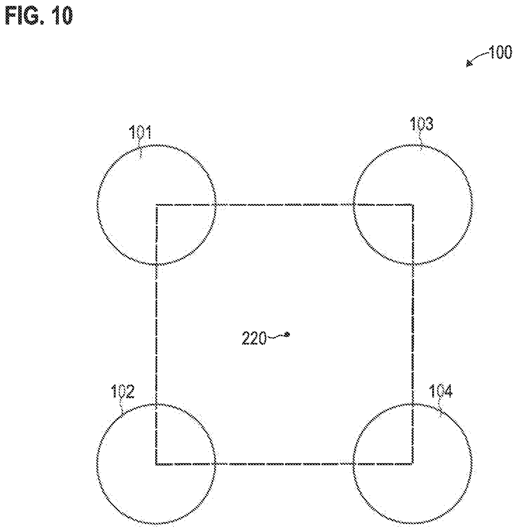

Während voranstehend verschiedene Beispiele in Bezug auf einen Faser-Scanner mit einer Anzahl von drei Fasern 101-104 beschrieben wurden, können entsprechende Beispiele auch für einen Faser-Scanner 100 mit einer größeren Anzahl von Fasern implementiert werden. Zum Beispiel ist in FIG. 10 ein Beispiel dargestellt, in welchem der Faser-Scanner 100 eine Anzahl von vier Fasern 101-104 umfasst. Dabei sind die Fasern 101-104 rotationssymmetrische in Bezug auf die Zentralachse 220 mit einer vierzähligen Rotationssymmetrie angeordnet. Die Fasern 101-104 sind an den Ecken eines Quadrats angeordnet. Auch im Szenario der FIG. 10 kann die gekoppelte Torsionsmode 301 angeregt werden, bei der eine Verdrillung der Fasern 101-104 um ihre Zentralachse 220, sowie eine Verdrillung jeder einzelnen Faser 101-104 um ihre jeweilige Längsachse (in FIG. 10 nicht gezeigt, senkrecht zur Zeicheneben) erfolgt. Im Allgemeinen kann also der Winkelabstand der Fasern 101-104 (im Beispiel der FIG. 10 90° wegen der vierzähligen Symmetrie) kleiner sein, als der Torsionswinkel, der z.B. >90° sein kann, optional >120°, weiter optional >160°.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

## Patentansprüche

1. Vorrichtung (100), die umfasst:
- mindestens zwei faserförmige Elemente (101-104), die zwischen einer Fixierung (141) und einer Umlenkeinheit (142, 145) angeordnet sind,
- die Umlenkeinheit (142, 145), die eingerichtet ist, um Licht (146) umzulenken, und
- einen Aktuator, der eingerichtet ist, um mindestens einen Freiheitsgrad der Bewegung (301, 302) der mindestens zwei faserförmigen Elemente (101-104) gekoppelt anzuregen,
wobei der mindestens eine Freiheitsgrad der Bewegung (301, 302) eine Torsionsmode (301) umfasst,
wobei sich die mindestens zwei faserförmigen Elemente (101-104) von einer Rückseite eines Spiegels der Umlenkeinheit (142, 145) weg und hin zur Fixierung (141) erstrecken,
wobei die Umlenkeinheit (142, 145) ein Endstück (144) aufweist, auf welchem ein Spiegel (145) aufgebracht ist,
wobei die mindestens zwei faserförmigen Elemente (101-104) zwischen der Fixierung (141) und dem Endstück (144) angeordnet sind,
wobei der Spiegel (145) eine Verkippung gegenüber den Längsachsen der mindestens zwei faserförmigen Elemente (101-104) aufweist.

2. Vorrichtung (100) nach Anspruch 1,
wobei die Längsachsen (111-113) der mindestens zwei faserförmigen Elemente (101-104) jeweils paarweise Winkel miteinander einschließen, die nicht größer als 10° sind,
wobei ein Strahlengang des Lichts (146) zumindest in einem Teilbereich parallel zu einer Zentralachse (220) der mindestens zwei faserförmigen Elemente (101-104) verläuft.

3. Vorrichtung (100) nach einem der Ansprüche 1 oder 2,
wobei bei Anregung der Torsionsmode (301) ein Verdrillen der mindestens zwei faserförmigen Elemente (101-104) ineinander um eine Zentralachse (220) der mindestens zwei faserförmigen Elemente (101-104) erfolgt, sowie ein Verdrillen jedes faserförmigen Elements (101-104) der mindestens zwei faserförmigen Elemente (101-104) um die entsprechende Längsachse (111-113) erfolgt.

4. Vorrichtung (100) nach Anspruch 1,
wobei die Verkippung im Bereich von 30° - 50° liegt, optional in etwa 45° beträgt.

5. Vorrichtung nach Anspruch 1 oder 2,
wobei das Endstück (144) auf einer Rückseite des Spiegels (145) angeordnet ist.

6. Vorrichtung nach einem der voranstehenden Ansprüche,
wobei die Vorrichtung (100) eingerichtet ist, durch Anregen der Torsionsmode das Licht Periskop-artig zu scannen.

7. Vorrichtung (100) nach einem der voranstehenden Ansprüche,
wobei die mindestens zwei faserförmige Elemente (101-104) eine Anordnung mit Rotationssymmetrie in Bezug auf eine Zentralachse (220) aufweisen.

8. Vorrichtung (100) nach Anspruch 7,
wobei die Rotationssymmetrie n-zählig ist, wobei n die Anzahl der mindestens zwei faserförmigen Elemente (101-104) bezeichnet.

9. Vorrichtung (100) nach Anspruch 8,
wobei ein Torsionswinkel der Torsionsmode (301) größer ist als 360°/n.

10. Vorrichtung (100) nach Anspruch 8 oder 9,
wobei die Rotationssymmetrie vier-zählig ist.

11. Vorrichtung (100) nach einem der voranstehenden Ansprüche,
wobei die Eigenfrequenz der niedrigsten Transversalmode (302) der mindestens zwei faserförmigen Elemente (101-104) größer ist als die Eigenfrequenz der niedrigsten Torsionsmode (301).

12. Vorrichtung (100) nach einem der voranstehenden Ansprüche,
wobei der Aktuator eingerichtet ist, um die mindestens zwei faserförmigen Elemente (101-104) gekoppelt über die Fixierung (141) anzuregen.

13. Verfahren, das umfasst:
- mittels eines Aktuators: Anregen einer Torsionsmode (301) von mindestens zwei faserförmigen Elementen (101-104), die zwischen einer Fixierung (141) und einer Umlenkeinheit (142, 145) angeordnet sind, wobei die Umlenkeinheit (142, 145) eingerichtet ist, um Licht umzulenken, wobei sich die mindestens zwei faserförmigen Elemente (101-104) von einer Rückseite eines Spiegels der Umlenkeinheit (142, 145) weg und hin zur Fixierung (141) erstrecken, wobei die Umlenkeinheit (142, 145) ein Endstück (144) aufweist, auf welchem ein Spiegel (145) aufgebracht ist,
wobei die mindestens zwei faserförmigen Elemente (101-104) zwischen der Fixierung (141) und dem Endstück (144) angeordnet sind,
wobei der Spiegel (145) eine Verkippung gegenüber den Längsachsen der mindestens zwei faserförmigen Elemente (101-104) aufweist
wodurch ein Verdrillen der mindestens zwei faserförmigen Elemente (101-104) ineinander um eine Zentralachse (220) der mindestens zwei faserförmigen Elemente (101-104) erfolgt, sowie ein Verdrillen jedes faserförmigen Elements (101-104) der mindestens zwei faserförmigen Elemente (101-104) um die entsprechende Längsachse (111-113) erfolgt.

## Claims

1. Device (100), comprising:
- at least two fibre-shaped elements (101-104) arranged between a fixation means (141) and a deflection unit (142, 145),
- the deflection unit (142, 145) configured to deflect light (146), and
- an actuator configured to excite at least one degree of freedom of movement (301, 302) of the at least two fibre-shaped elements (101-104) in coupled fashion,
wherein the at least one degree of freedom of movement (301, 302) comprises a torsion mode (301),
wherein the at least two fibre-shaped elements (101-104) extend away from a back side of a mirror of the deflection unit (142, 145) and towards the fixation means (141),
wherein the deflection unit (142, 145) has an end piece (144) to which a mirror (145) is attached,
wherein the at least two fibre-shaped elements (101-104) are arranged between the fixation means (141) and the end piece (144),
wherein the mirror (145) has a tilt vis-à-vis the longitudinal axes of the at least two fibre-shaped elements (101-104).

2. Device (100) according to Claim 1,
wherein the longitudinal axes (111-113) of the at least two fibre-shaped elements (101-104) in each case form pairwise angles with one another of no more than 10°,
wherein a beam path of the light (146) at least in one portion extends parallel to a central axis (220) of the at least two fibre-shaped elements (101-104).

3. Device (100) according to either of Claims 1 and 2,
wherein an excitation of the torsion mode (301) leads to twisting of the at least two fibre-shaped elements (101-104) into one another around a central axis (220) of the at least two fibre-shaped elements (101-104) and twisting of each fibre-shaped element (101-104) of the at least two fibre-shaped elements (101-104) around the appropriate longitudinal axis (111-113).

4. Device (100) according to Claim 1,
wherein the tilt is in the range of 30° to 50°, and optionally approximately 45°.

5. Device according to Claim 1 or 2,
wherein the end piece (144) is arranged on a back side of the mirror (145).

6. Device according to any of the preceding claims,
wherein the device (100) is configured to scan the light in periscope-like fashion by exciting the torsion mode.

7. Device (100) according to any of the preceding claims,
wherein the at least two fibre-shaped elements (101-104) have an arrangement with rotational symmetry with respect to a central axis (220).

8. Device (100) according to Claim 7,
wherein the rotational symmetry is n-fold, where n denotes the number of the at least two fibre-shaped elements (101-104).

9. Device (100) according to Claim 8,
wherein a torsion angle of the torsion mode (301) is greater than 360°/*n*.

10. Device (100) according to Claim 8 or 9,
wherein the rotational symmetry is fourfold.

11. Device (100) according to any of the preceding claims,
wherein the natural frequency of the lowest transverse mode (302) of the at least two fibre-shaped elements (101-104) is greater than the natural frequency of the lowest torsion mode (301).

12. Device (100) according to any of the preceding claims,
wherein the actuator is configured to excite the at least two fibre-shaped elements (101-104) in coupled fashion by way of the fixation means (141).

13. Method comprising:
- using an actuator to excite a torsion mode (301) of at least two fibre-shaped elements (101-104) arranged between a fixation means (141) and a deflection unit (142, 145), the deflection unit (142, 145) being configured to deflect light, the at least two fibre-shaped elements (101-104) extending away from a back side of a mirror of the deflection unit (142, 145) and towards the fixation means (141), and the deflection unit (142, 145) having an end piece (144) to which a mirror (145) is applied,
wherein the at least two fibre-shaped elements (101-104) are arranged between the fixation means (141) and the end piece (144),
wherein the mirror (145) has a tilt vis-à-vis the longitudinal axes of the at least two fibre-shaped elements (101-104),
whereby the at least two fibre-shaped elements (101-104) are twisted into one another around a central axis (220) of the at least two fibre-shaped elements (101-104) and each fibre-shaped element (101-104) of the at least two fibre-shaped elements (101-104) is twisted around the appropriate longitudinal axis (111-113).

## Revendications

1. Dispositif (100) comprenant :
- au moins deux éléments en forme de fibre (101-104) disposés entre une fixation (141) et une unité de déviation (142, 145),
- l'unité de déviation (142, 145), qui est conçue pour dévier la lumière (146), et
- un actionneur qui est conçu pour stimuler par couplage au moins un degré de liberté du mouvement (301, 302) des au moins deux éléments en forme de fibre (101-104),
l'au moins un degré de liberté du mouvement (301, 302) comprenant un mode de torsion (301),
les au moins deux éléments en forme de fibre (101-104) s'étendant depuis un côté arrière d'un miroir de l'unité de déviation (142, 145) et en direction de la fixation (141),
l'unité de déviation (142, 145) comportant une pièce d'extrémité (144) sur laquelle est monté un miroir (145),
les au moins deux éléments en forme de fibre (101-104) étant disposés entre la fixation (141) et la pièce d'extrémité (144),
le miroir (145) présentant une inclinaison par rapport aux axes longitudinaux des au moins deux éléments en forme de fibre (101-104).

2. Dispositif (100) selon la revendication 1,
les axes longitudinaux (111-113) des au moins deux éléments en forme de fibre (101-104) formant chacun l'un avec l'autre des angles par paires qui ne sont pas supérieurs à 10°,
un trajet de faisceau de la lumière (146) s'étendant parallèlement à un axe central (220) des au moins deux éléments en forme de fibre (101-104) au moins dans une sous-zone.

3. Dispositif (100) selon l'une des revendications 1 ou 2, lorsque le mode de torsion (301) est stimulé, les au moins deux éléments en forme de fibre (101-104) étant tordus l'un dans l'autre autour d'un axe central (220) des au moins deux éléments en forme de fibre (101-104), et une torsion de chaque élément en forme de fibre (101-104) des au moins deux éléments en forme de fibre (101-104) étant effectuée autour de l'axe longitudinal correspondant (111-113).

4. Dispositif (100) selon la revendication 1,
l'inclinaison étant dans la gamme allant de 30° à 50°, éventuellement d'environ 45°.

5. Dispositif selon la revendication 1 ou 2,
la pièce d'extrémité (144) étant disposée sur un côté arrière du miroir (145).

6. Dispositif selon l'une des revendications précédentes,
le dispositif (100) étant conçu pour balayer la lumière à la manière d'un périscope par stimulation du mode de torsion.

7. Dispositif (100) selon l'une des revendications précédentes,
les au moins deux éléments en forme de fibre (101-104) comportant un ensemble présentant une symétrie de rotation par rapport à un axe central (220).

8. Dispositif (100) selon la revendication 7,
la symétrie de rotation étant d'ordre n, n désignant le nombre d'au moins deux éléments en forme de fibre (101-104).

9. Dispositif (100) selon la revendication 8,
un angle de torsion du mode de torsion (301) étant supérieur à 360°/*n*.

10. Dispositif (100) selon la revendication 8 ou 9,
la symétrie de rotation étant d'ordre quatre.

11. Dispositif (100) selon l'une des revendications précédentes,
la fréquence propre du mode transversal le plus bas (302) des au moins deux éléments en forme de fibre (101-104) étant supérieure à la fréquence propre du mode de torsion le plus bas (301).

12. Dispositif (100) selon l'une des revendications précédentes,
l'actionneur étant conçu pour stimuler les au moins deux éléments en forme de fibre (101-104) couplés par le biais de la fixation (141).

13. Procédé qui comprend les étapes suivantes :
- au moyen d'un actionneur : stimuler un mode de torsion (301) d'au moins deux éléments en forme de fibre (101-104), qui sont disposés entre une fixation (141) et une unité de déviation (142, 145), l'unité de déviation (142, 145) étant conçue pour dévier la lumière, les au moins deux éléments en forme de fibre (101-104) s'étendant depuis un côté arrière d'un miroir de l'unité de déviation (142, 145) et en direction de la fixation (141), l'unité de déviation (142, 145) comportant une pièce d'extrémité (144) sur laquelle est monté un miroir (145),
les au moins deux éléments en forme de fibre (101-104) étant disposés entre la fixation (141) et la pièce d'extrémité (144),
le miroir (145) présentant une inclinaison par rapport aux axes longitudinaux des au moins deux éléments en forme de fibre (101-104)
ce qui permet d'effectuer une torsion des au moins deux éléments en forme de fibre (101-104) l'un dans l'autre autour d'un axe central (220) des au moins deux éléments en forme de fibre (101-104), et une torsion de chaque élément en forme de fibre (101-104) des au moins deux éléments en forme de fibre (101-104) étant effectuée autour de l'axe longitudinal correspondant (111-113).
